# EUROPEAN PATENT SPECIFICATION

(11) **EP 2 648 342 B1**
(45) Date of publication and mention of the grant of the patent: **03.02.2016**
(21) Application number: 12305404.1
(22) Date of filing: 05.04.2012
(51) Int. Cl.: H04B 7/04, H04B 7/06

(54) **Apparatuses, methods and computer programs for a mobile transceiver and for a base station transceiver**
Vorrichtungen, Verfahren und Computerprogramme für einen mobilen Sender-Empfänger und für einen Basisstations-Sender-Empfänger
Procédés, appareils et programmes informatiques pour un émetteur/récepteur mobile et pour un émetteur/récepteur de station de base

(43) Date of publication of application: 09.10.2013
(73) Proprietor: ALCATEL LUCENT, 92100 Boulogne-Billancourt (FR)
(72) Inventor: Hoek, Cornelis, 71732 Tamm (DE)
(74) Representative: Knecht, Ulrich Karl

(56) References cited:
- EP-A1- 2 124 351
- WO-A1-2010/040709
- WO-A2-2009/109913

## Description

Embodiments of the present invention relate to mobile communications, more particularly but not exclusively to mobile communication networks using sectorization.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts as multi antenna transmission are exploited.

For example, base station transceivers use advanced antenna technologies, such as sectorization or beamforming, to spatially restrict, focus, or form transmissions. By spatially forming transmissions interference can be reduced or cancelled and additional system capacity can be obtained. One advanced antenna technology is fixed beamforming, which is similar to sectorization as the coverage area of a cell is subdivided using fixed beams. These fixed beams can, for example, be formed in the transmission band using a Butler-matrix. That is to say, the geometry of an antenna array is combined with a set of delay lines or phase shifts, such that a number of adjacent fixed antenna beams is formed to which users of a cell can be assigned. Such a fixed beam may then be treated like a small cell, i.e. it may have some beam specific signals, such as pilot or reference channels.

A more advance concept is the so called soft sectorization, where the coverage area of a cell is subdivided using subsectors, which correspond to antenna beams formed using an antenna array. The sectorization is called "soft" since the antenna beams can be changed by using according weighting vectors at the antenna array to form the beams. In other words different sets of such weighting vectors can be used to implement or realize different sectorizations or sectorization schemes. Furthermore, there are hard sectorization concepts, which use sector antennas or fixed beams to implement a sectorization scheme, which cannot be easily changed.

When implementing a cellular network it is crucial to determine the performance of such sectorization schemes. Therefore measurement campaigns are carried out to obtain channel data for the different schemes, which can then form a basis for network planning and performance improvement. With standard channel sounding systems, i.e. systems to measure channel or radio channel data, the performance of soft sectorization or hard sectorization can only be measured if each sector transmits its own standard conform transmit (TX) signal. Such a transmit signal may correspond to a synchronization pattern, reference signal, or pilot channel.

That is to say that generally, standard base stations, as e.g. NodeB's for the Universal Mobile Communication System (UMTS), have to be used for the measurement and that a new measurement has to be made for each alternative sectorization realization. For a hard sectorization realization with a fixed beamforming using an antenna array for each realization, even new hardware, e.g. in terms of a Butler-matrix, may be provided for each sectorization scheme.

Document WO 2009/109913 A2 discloses a method for grouping terminal devices in a wireless communication network containing a base-station, wherein each terminal reports to the base station the level of signal received at the terminal when the base-station transmits to another terminal or terminals. The base station then selects from the plurality of the terminals, groups of terminals indicating low signal measurements for data transmissions sent to other group members of the group.

Document WO 2010/040709 A1 describes a method and a device for data processing in a wireless communication system, in particular in a cellular system. An N-to-M control-to-data sectorization is provided to at least one mobile terminal, wherein N corresponds to a number of control sectors and M corresponds to a number of data sectors. Furthermore, a mobile terminal for such an approach as well as a communication system comprising said device are provided.

### Summary

Embodiments are based on the finding that with the availability of smart antennas or active antenna arrays the options for sectorization increase, i.e. a higher number and more complex sectorization schemes are enabled. Moreover, with the growing number of sectorization schemes test efforts and measurement efforts may also be increased, since the respective sectorization schemes and combinations thereof are evaluated for network planning and optimization purposes. It is a further finding that measurement efforts can be decreased when multiple sectors or sectorization schemes can be measured together. According to another finding different sectors or sectorization schemes can be measured using different radio resources, such as different frequency layers, bands, sub-bands, different time slots, symbols, radio frames, sub-frames, time transmission intervals, etc.

Embodiments provide an apparatus for a mobile transceiver for measuring data of at least two beamforming configurations of a base station transceiver. Embodiments may provide said apparatus to be operated by or included in a mobile transceiver. In the following, the apparatus will also be referred to as mobile transceiver apparatus. Embodiments may also provide a mobile transceiver comprising the mobile transceiver apparatus.

The mobile transceiver and the base station may be operable to be part of a mobile communication system. The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), e.g. Universal Mobile Telecommunication System (UMTS), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Code Division Multiple Access (CDMA), Orthogonal Frequency Division Multiple Access (OFDMA) or any other technology with a multiplexing capable physical layer like Filter Bank Based Multicarrier (FBMC) systems. In the following the terms mobile communication system and mobile communication network are used synonymously.

In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, a remote radio head, a transmission point etc., which may be further subdivided in a remote unit and a central unit.

In embodiments the base station transceiver operates multiple transmit antennas, i.e. the base station transceiver is operable to use a plurality of antennas to communicate with a mobile transceiver. The plurality of antennas can be arranged in many different ways. Some examples are a uniform linear array (horizontal or vertical), a circular array, a triangular array, array of cross-polarized antennas, an antenna plane, as multi-dimensional array, etc. The antennas themselves can, for example, be dipole antennas, patch antennas, etc.

The mobile transceiver apparatus comprises a receiver for receiving a first radio signal using a first beamforming configuration on a first radio resource and for receiving a second radio signal using a second beamforming configuration on a second radio resource. The receiver may correspond to any means for receiving radio signals. The means for receiving may correspond to a receiver compliant to one of the above communication standards or systems. Generally, any receiver for receiving radio signals is conceivable, e.g. an OFDM receiver. In other words, the receiver receives radio signals on different radio resources, and the signals are transmitted by the base station transceiver using different beamforming configurations.

The mobile transceiver apparatus further comprises a determiner for determining a representation of the first radio signal and for determining a representation of the second radio signal. The determiner may correspond to any means for determining. For example, the determiner may comprise an Analogue/Digital (A/D) converter and Digital Signal Processor (DSP). The representation of the first and second radio signal may therefore be in the digital domain, for example, in terms of complex samples of the respective radio signals. The mobile transceiver apparatus further comprises a storage unit for storing a history of the representations of the first radio signal and the second radio signal. The storage unit may correspond to any means for storing, such as one or more hard drives, solid state memory, flash memory, etc.

In other words, the mobile transceiver apparatus may therewith be operable to continuously store the representations of the two signals. The term "continuously" is to be understood in a way that representations are stored on a regular basis. Hence, embodiments may store a trace or a progression of the signal or the radio channel. In other words the history of the representations comprises a plurality of representations representing a time period of a signal or a radio channel.

In some embodiments the receiver is operable to convert a received radio signal from a transmission band to a base band. The representation in the base band may be complex, e.g. in terms of representations of inphase (i) and quadrature (q) components. In embodiments the receiver may therefore comprise one or more receive antennas, a Low-Noise-Amplifier (LNA) for amplifying a radio signal received, one or more filters for filtering the receive signal, a mixer for down-mixing the receive signal from the transmission band to an intermediate band or a base band.

The determiner can be operable to determine a representation of a first radio channel as representation for the first radio signal. That is to say the determiner may determine a representation of the radio channel, e.g. in terms of attenuation and a phase shift, which may be represented in the complex base band. Similarly, the determiner may determine a representation of a second radio channel as representation for the second radio signal. The storage unit may be operable to store samples of the first radio channel and the second radio channel in base band representation. The stored radio channel representations may enable or form a radio channel trace such that the respective radio channels can be reconstructed. For example, a sample of each of the radio channels may be stored every TTI, every radio frame, every sub-frame, etc. Moreover, a sample of each of the radio channels may also be stored at multiple frequencies to enable a reconstruction of the radio channel in the frequency domain. For example, a sample of each of the radio channels may be stored for every frequency layer, at multiple carriers, at multiple sub-bands, etc.

In other words, the sampling rate of the radio channel in the time domain may be such that the time between two samples is shorter than the coherence time of the radio channel. In the frequency domain the sampling rate may be such that the bandwidth between two adjacent sampling frequencies is less than the coherence bandwidth of the radio channel. The sampling characteristics of the radio channel may enable a reconstruction of the radio channel in terms of its fading characteristics. In embodiments the determiner and the storage unit can be operable to determine and store a representation of a radio channel such that based on the stored representations the radio channel is reconstructable for emulation. The determiner and the storage unit can be operable to determine and store a representation of a radio channel such that a fading characteristic of the radio channel is reconstructable from the stored representation. In some embodiments the slow fading characteristic may be recontructable, in some embodiments the fast fading characteristics may be reconstructable.

In further embodiments the receiver can be operable to convert the received radio signal from the transmission band to the base band and the determiner can be operative to determine complex base band samples as representation for the first radio signal and to determine complex base band samples as representation for the second radio signal. In other words, in this embodiment the determiner may determine complex base band representations of the first and second signals. The storage unit can be operable to store complex samples of the first radio signal and the second radio signal in base band representation. Hence, in this embodiment the first and second radio signals are stored such that they are recontructable. In some embodiments the corresponding radio channels may then be determined later in the processing chain from reconstructed first and second radio signals.

The history of the representations may correspond to a time period during which the mobile transceiver moves through multiple cells of a cellular communication system, e.g. one of the above mentioned communication systems. The mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate multiple cells on one or more frequency layers, in some embodiments a cell may correspond to a sector, which may be further subdivided by soft sectorization or beamforming, as will be detailed subsequently.

For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas, e.g. one of the above arrays of sectorized antennas.

Soft sectorization is a technique that uses multiple antennas, e.g. an active antenna array, to create virtual sectors, i.e. beams, which are based on beamforming configurations and which can be seen as sectors. In embodiments the first and the second beamforming configurations may correspond to a first and a second soft sector of a soft sectorization scheme. In other embodiments the first and the second beamforming configurations may correspond to sectors of a first and a second soft sectorization scheme, for example, sectors of a soft sectorization scheme.

In embodiments, the first and the second radio resources may correspond to different frequency bands or sub-bands and/or the first and the second radio resources may correspond to different time slots, symbols, radio frames, or time transmission intervals. That is to say, in some embodiments the first and second radio resources correspond to different combinations of time and frequency resources, such as, for example, different combinations of sub-bands and symbols in an OFDM system, which is also referred to as resource blocks. In some embodiments the first and the second radio resources may correspond to interleaved frequency resources, e.g. the first radio resource may comprise even sub-carriers for the first beamforming configuration and the second radio resource may comprise odd sub-carriers for the second beamforming configuration.

Moreover, embodiments provide an apparatus for a base station transceiver for enabling a measurement of at least two beamforming configurations, in line with the above description, i.e. embodiments may provide said apparatus to be operated by or included in a base station transceiver. In the following, the apparatus will also be referred to as base station transceiver apparatus. Embodiments may also provide a base station transceiver comprising the base station transceiver apparatus. The base station transceiver operates multiple transmit antennas. The base station transceiver apparatus comprises a transmitter for transmitting a first radio signal using a first beamforming configuration on a first radio resource and for transmitting a second radio signal using a second beamforming configuration on a second radio resource. The first and second beamforming configurations may correspond to different soft sectorization schemes. The transmitter may correspond to any means for transmitting, e.g. to an OFDM transmitter. In embodiments the transmitter may comprise multiple Power Amplifiers (PA) for amplifying the signals for the multiple transmit antennas.

As has already been detailed above, the first and the second radio resources may correspond to different frequency bands or sub-bands and/or the first and the second radio resources may correspond to different time slots, symbols, radio frames, or time transmission intervals. The base station transceiver may comprise an active antenna array with the multiple antennas. The active antenna array may comprise at least two columns of at least two stacked antennas each. In other words, the active antenna may comprise a two-dimensional antenna array, which may enable horizontal and vertical beamforming. The soft sectorization scheme may comprise multiple sectors differing in their azimuth angle and/or differing their elevation angle. At least some of the multiple antennas are cross-polarized antennas. Hence in some embodiments, beamforming may be carried out in different polarizations, i.e. different beamforming weights may be used for orthogonal polarizations.

Embodiments may allow a more accurate analysis of the performance of soft sectorization implementations with measured channel sounding data. Embodiments may provide a better accuracy as multiple configurations are measured in combination at the same location, which can be problematic to achieve with the conventional concepts as multiple measurement campaign may be carried out subsequently. Embodiments may therewith enable a comparison of alternative sectorization algorithms with the same or combined data.

Embodiments also provide a method for a mobile transceiver for measuring data of at least two beamforming configurations of a base station transceiver. The base station transceiver operates multiple transmit antennas. The method comprises receiving a first radio signal using a first beamforming configuration on a first radio resource and receiving a second radio signal using a second beamforming configuration on a second radio resource. The method further comprises determining a representation of the first radio signal and determining a representation of the second radio signal. The method further comprises storing a history of representations of the first radio signal and the second radio signal.

Embodiments provide a method for a base station transceiver for enabling a measurement of at least two beamforming configurations. The base station transceiver operates multiple transmit antennas. The method comprises transmitting a first radio signal using a first beamforming configuration on a first radio resource, wherein the first beamforming configuration corresponds a first soft sectorization scheme, and transmitting a second radio signal using a second beamforming configuration on a second radio resource, wherein the second beamforming configuration corresponds to a second soft sectorization scheme.

Embodiments further provide a computer program having a program code for performing one of the above described methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Fig. 1 shows an embodiment of a mobile transceiver apparatus and an embodiment of a base station transceiver apparatus;
Fig. 2 illustrates different soft sectorization schemes in embodiments;
Fig. 3 shows a block diagram of an embodiment of a method for a mobile transceiver; and
Fig. 4 shows a block diagram of an embodiment of a method for a base station transceiver.

### Description of some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

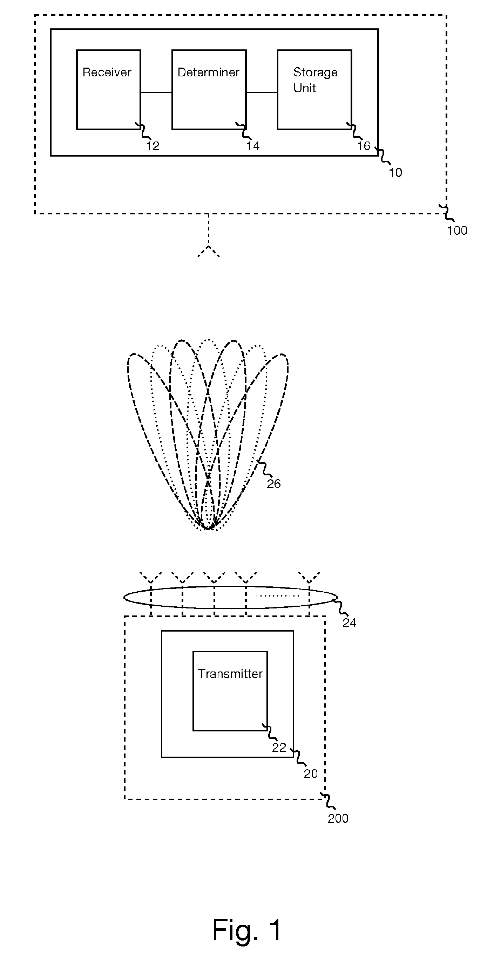

Fig. 1 shows an embodiment of a mobile transceiver apparatus 10 and an embodiment of a base station transceiver apparatus 20. In the following, optional components are shown in dashed lines.

The apparatus 10 for a mobile transceiver 100 is operable for measuring data of at least two beamforming configurations of a base station transceiver 200. The base station transceiver 200 operates multiple transmit antennas 24. In the embodiment, the mobile transceiver 100 is shown with a single antenna; in further embodiments it may operate multiple antennas, e.g. an antenna array as well. The mobile transceiver apparatus 10 comprises a receiver 12 for receiving a first radio signal using a first beamforming configuration on a first radio resource and for receiving a second radio signal using a second beamforming configuration on a second radio resource. The mobile transceiver apparatus 10 further comprises a determiner 14 for determining a representation of the first radio signal and for determining a representation of the second radio signal. Moreover, the mobile transceiver apparatus 10 comprises a storage unit 16 for storing a history of the representations of the first radio signal and the second radio signal. As shown in Fig. 1 the receiver 12 and the storage unit 16 are coupled to the determiner 14.

Fig. 1 further illustrates an apparatus 20 for a base station transceiver 200 for enabling a measurement of at least two beamforming configurations. The base station transceiver apparatus 20 comprises a transmitter 22 for transmitting a first radio signal using a first beamforming configuration on a first radio resource and for transmitting a second radio signal using a second beamforming configuration on a second radio resource. The first and second beamforming configurations correspond to different soft sectorization schemes. In the present embodiment it is assumed that the mobile transceiver 100 and the base station transceiver 200 are operable in an LTE system. The first and the second radio resources correspond to OFDM resources, i.e. a combination of a time and a frequency resource, which may also be referred to as a Physical Resource Block (PRB). A PRB is used in LTE to describe a set of 12 sub-carriers in the frequency domain and a TTI, which corresponds to 1ms or 12 or 14 symbols in the time domain. Hence, it contains 12x14 or 12x12 frequency-time resources. In further embodiments, the first and the second radio resources can use a finer granularity up to a single frequency-time resource, i.e. the first and the second radio resource may correspond to a single sub-carrier or a single symbol. Hence, the first and the second radio resources correspond to a combination of different frequency sub-bands and symbols.

In Fig. 1 the beamforming configurations 26 are shown in the center by two different sets of beams, which are differentiated by dashed and dotted lines. In this embodiment it is assumed that the base station transceiver 200 operates an active antenna array with multiple antennas. The active antenna array comprises at least two columns of at least two stacked antennas each. As an example of an antenna array in an embodiment, an antenna array consisting of 4 columns of 10 vertically stacked dual polarized antennas can be assumed. The antenna array can be used to create 4 sectors in the azimuth direction and 2 sectors in the elevation direction with 2 Cross-Polarized (X-pol) inputs each. In one embodiment 8 virtual sectors result with 2 inputs each. For each of the 16 inputs sectorization with a 10 x 4 = 40 element beamformer can be realized. So this sectorization implementation can be described with 16 dedicated beamformers, i.e. with 16 different weighting vectors each comprising 40 complex weights. In other words, each of the 16 beams is formed by a combination of the 40 signals, which can be manipulated by different phases and/or by different amplitudes.

In some embodiments the number of sectors can be varied in both dimensions, e.g. aside from the size of the individual sectors a different number of azimuth and elevation sectors (according to multiple elevation levels) can be used. In the following embodiment the first and the second beamforming configurations can correspond to a first and a second soft sector of a soft sectorization scheme, or they can correspond to sectors of the first and the second soft sectorization scheme. The soft sectorization scheme comprises multiple sectors differing in their azimuth angle and differing in their elevation angle.

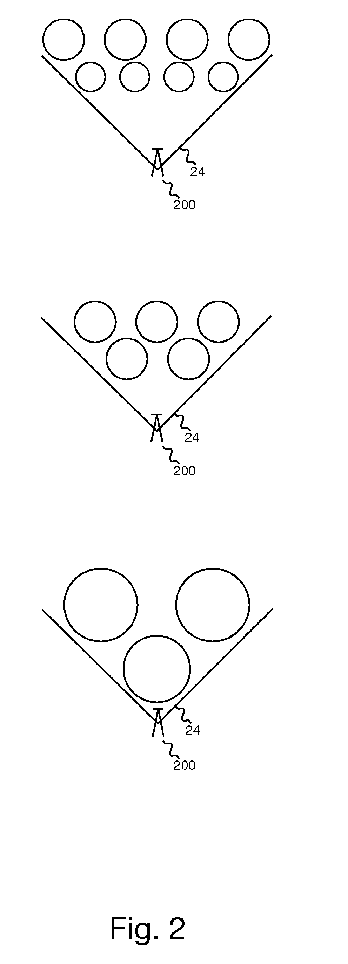

Fig. 2 illustrates different soft sectorization schemes, which can be used by embodiments. In Fig. 2 the active antenna array is symbolized by its coverage area 24, originating from the base station transceiver 200. In the coverage area multiple sectors are formed, which are indicated by circles. In Fig. 2 at the top a soft sectorization scheme with four sectors in azimuth direction on two elevation levels totaling to eight sectors is illustrated. In the middle of Fig. 2 a sectorization scheme with three sectors at a higher elevation level and two sector at a lower elevation level is shown. At the bottom Fig. 2 further shows a sectorization scheme with two sectors on a high elevation level and one sector at a low elevation level. In Fig. 2 low and high elevation levels are differentiated by their distance from the origin of the coverage area 24, which correspond to the position of the base station transceiver 200.

In an embodiment the base station transceiver 200 transmits multiple TX beamformer data signals for all sector realizations to be investigated in a time and/or frequency multiplex. That is to say, the three different sectorization schemes shown in Fig. 2 are used in combination, e.g. on different sub-bands, on different symbols, or on different combination thereof, respectively. The mobile station transceiver 100 then receives the multiple signals transmitted using the multiple beamforming configurations or sectorization schemes. The received data can then be stored in real-time by one or more mobile transceivers. This may allow measuring the channel data of the different soft sectors by the moving mobile transceiver 100.

That is to say, in the embodiment the receiver 12 at the mobile transceiver 100 is operable to convert a received radio signal from a transmission band to a base band, the determiner 14 is operative to determine a representation of a first radio channel as representation for the first radio signal and to determine a representation of a second radio channel as representation for the second radio signal, and the storage unit 16 is operable to store samples of the first radio channel and the second radio channel in base band representation. As it has already been described above, instead of determining the radio channel representation directly at the mobile transceiver apparatus 10, such data may be derived subsequently in further embodiments from the signal representations. Hence, in other embodiments, the receiver 12 is operable to convert a received radio signal from a transmission band to a base band, the determiner 14 is operative to determine complex base band samples as representation for the first radio signal and to determine complex base band samples as representation for the second radio signal, and the storage unit is operable to store complex samples of the first radio signal and the second radio signal in base band representation.

The logged received base band data can be used to emulate the performance of different soft sector realizations in the actual cells, which may be more accurate than a ray-tracing emulation or software channel simulation. In other words, the history of the representations corresponds to a time period during which the mobile transceiver 100 moves through multiple cells of the cellular communication system. The determiner 14 and the storage unit 16 are operable to determine and store a representation of a radio channel such that based on the stored representations the radio channel is reconstructable for emulation. The determiner 14 and the storage unit 16 can be operable to determine and store a representation of a radio channel such that a fading characteristic of the radio channel is reconstructable from the stored representation. In line with the embodiment described above with the help of Fig. 2, embodiments may make use of multiplexing different beamformer realizations on an active array. Storing the received signals of a moving mobile transceiver 100 may allow for a more accurate optimization of the soft sectorisation method or scheme to be used.

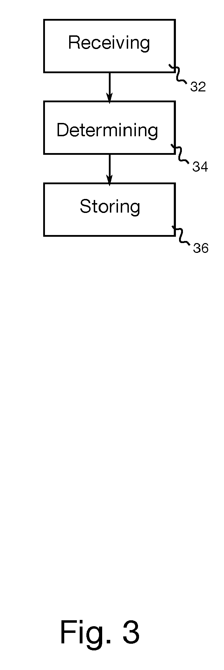

Fig. 3 shows a block diagram of an embodiment of a method for a mobile transceiver 100 for measuring channel data of at least two beamforming configurations of a base station transceiver 200. The method comprises a step of receiving 32 a first radio signal using a first beamforming configuration on a first radio resource and receiving a second radio signal using a second beamforming configuration on a second radio resource. The method further comprises determining 34 a representation of the first radio signal and determining a representation of the second radio signal and a step of storing 36 a history of representations of the first radio signal and the second radio signal.

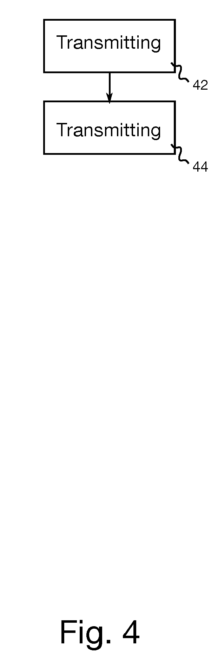

Fig. 4 shows a block diagram of an embodiment of a method for a base station transceiver 200 for enabling a measurement of at least two beamforming configurations. The method comprises transmitting 42 a first radio signal using a first beamforming configuration on a first radio resource, wherein the first beamforming configuration corresponds a first soft sectorization scheme, and transmitting 44 a second radio signal using a second beamforming configuration on a second radio resource, wherein the second beamforming configuration corresponds to a second soft sectorization scheme.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to per-form a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for determining", "means for storing", "means for transmitting" etc., may be provided through the use of dedicated hardware, such as "a receiver", "a determiner", "a storage", "a transmitter" etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a mobile transceiver (100) for measuring data of at least two beamforming configurations of a base station transceiver (200), the base station transceiver (200) operating multiple transmit antennas (24), the apparatus (10) comprising
a receiver (12) for receiving a first radio signal using a first beamforming configuration on a first radio resource and for receiving a second radio signal using a second beamforming configuration on a second radio resource, wherein the first and second beamforming configurations correspond to soft sectorization;
a determiner (14) for determining a representation of the first radio signal and for determining a representation of the second radio signal; and
a storage unit (16) for storing a history of the representations of the first radio signal and the second radio signal.

2. The apparatus (10) of claim 1, wherein the receiver (12) is operable to convert a received radio signal from a transmission band to a base band, wherein the determiner (14) is operative to determine a representation of a first radio channel as representation for the first radio signal and to determine a representation of a second radio channel as representation for the second radio signal, and wherein the storage unit (16) is operable to store samples of the first radio channel and the second radio channel in base band representation.

3. The apparatus (10) of claim 1, wherein the receiver (12) is operable to convert a received radio signal from a transmission band to a base band, wherein the determiner (14) is operative to determine complex base band samples as representation for the first radio signal and to determine complex base band samples as representation for the second radio signal, and wherein the storage unit (16) is operable to store complex samples of the first radio signal and the second radio signal in base band representation.

4. The apparatus (10) of claim 1, wherein the history of the representations corresponds to a time period during which the mobile transceiver 100 moves through multiple cells of a cellular communication system, wherein the determiner (14) and the storage unit (16) are operable to determine and store a representation of a radio channel such that based on the stored representations the radio channel is reconstructable for emulation, and /or wherein the determiner (14) and the storage unit (16) are operable to determine and store a representation of a radio channel such that a fading characteristic of the radio channel is reconstructable from the stored representation.

5. The apparatus (10) of claim 1, wherein the first and the second beamforming configurations correspond to a first and a second soft sector of a soft sectorization scheme.

6. The apparatus (10) of claim 1, wherein the first and the second beamforming configurations correspond to sectors of a first and a second soft sectorization scheme.

7. The apparatus (10) of claim 1, wherein the first and the second radio resources correspond to different frequency bands or subbands, and/or wherein the first and the second radio resources correspond to different time slots, symbols, radio frames, or time transmission intervals.

8. An apparatus (20) for a base station transceiver (200) for enabling measurement of at least two beamforming configurations at a mobile transceiver, the base station transceiver (200) operating multiple transmit antennas, the apparatus (20) comprising
a transmitter (22) for transmitting a first radio signal using a first beamforming configuration on a first radio resource and for transmitting a second radio signal using a second beamforming configuration on a second radio resource, wherein the first and second beamforming configurations correspond to different soft sectorization schemes.

9. The apparatus (20) of claim 8, wherein the first and the second radio resources correspond to different frequency bands or subbands, and/or wherein the first and the second radio resources correspond to different time slots, symbols, radio frames, or time transmission intervals.

10. The apparatus (20) of claim 8, wherein the base station transceiver (200) comprises an active antenna array with the multiple antennas, and wherein the active antenna array comprises at least two columns of at least two stacked antennas each.

11. The apparatus (20) of claim 8, wherein at least some of the multiple antennas are cross-polarized antennas.

12. The apparatus (20) of claim 8, wherein the soft sectorization scheme comprises multiple sectors differing in their azimuth angle and/or differing their elevation angle.

13. A method for a base station transceiver (200) for enabling a measurement of at least two beamforming configurations by a mobile transceiver (100), the base station transceiver (200) operating multiple transmit antennas, the method comprising
transmitting (42) by the base station transceiver (200) a first radio signal using a first beamforming configuration on a first radio resource, wherein the first beamforming configuration corresponds a first soft sectorization scheme;
transmitting (44) by the base station transceiver (200) a second radio signal using a second beamforming configuration on a second radio resource, wherein the second beamforming configuration corresponds to a second soft sectorization scheme;
receiving (32) by the mobile transceiver (100) a first radio signal using a first beamforming configuration on a first radio resource and receiving a second radio signal using a second beamforming configuration on a second radio resource, wherein the first and second beamforming configurations correspond to soft sectorization;
determining (34) by the mobile transceiver (100) a representation of the first radio signal and determining a representation of the second radio signal; and
storing (36) by the mobile transceiver (100) a history of representations of the first radio signal and the second radio signal.

14. A computer program having a program code for performing a method for a base station transceiver (200) for enabling a measurement of at least two beamforming configurations by a mobile transceiver (100), the base station transceiver (200) operating multiple transmit antennas, the method comprising
transmitting (42) by the base station transceiver (200) a first radio signal using a first beamforming configuration on a first radio resource, wherein the first beamforming configuration corresponds a first soft sectorization scheme; and
transmitting (44) by the base station transceiver (200) a second radio signal using a second beamforming configuration on a second radio resource, wherein the second beamforming configuration corresponds to a second soft sectorization scheme;
when the computer program is executed on a computer or a processor.

## Patentansprüche

1. Vorrichtung (10) für einen mobilen Sender-Empfänger (100) zum Messen von Daten von mindestens zwei Beamforming-Konfigurationen eines Basisstations-Sender-Empfängers (200), wobei der Basisstations-Sender-Empfänger (200) mehrere Sendeantennen (24) betreibt, wobei die Vorrichtung (10) Folgendes umfasst:
einen Empfänger (12) zum Empfangen eines ersten Funksignals unter Verwendung einer ersten Beamforming-Konfiguration auf einer ersten Funkressource und zum Empfangen eines zweiten Funksignals unter Verwendung einer zweiten Beamforming-Konfiguration auf einer zweiten Funkressource, wobei die erste und die zweite Beamforming-Konfiguration einer Softsektorierung entsprechen;
einen Determinator (14) zum Bestimmen einer Darstellung des ersten Funksignals und zum Bestimmen einer Darstellung des zweiten Funksignals; und
eine Speichereinheit (16) zum Speichern eines Verlaufs der Darstellungen des ersten Funksignals und des zweiten Funksignals.

2. Vorrichtung (10) nach Anspruch 1, wobei der Empfänger (12) betreibbar ist, um ein empfangenes Funksignal von einem Übertragungsband auf ein Basisband umzuwandeln, wobei der Determinator (14) betriebsfähig ist, um eine Darstellung eines ersten Funkkanals als Darstellung für das erste Funksignal zu bestimmen und um eine Darstellung eines zweiten Funkkanals als Darstellung für das zweite Funksignal zu bestimmen, und wobei die Speichereinheit (16) betreibbar ist, um Abtastungen des ersten Funkkanals und des zweiten Funkkanals in der Basisbanddarstellung zu speichern.

3. Vorrichtung (10) nach Anspruch 1, wobei der Empfänger (12) betreibbar ist, um ein empfangenes Funksignal von einem Übertragungsband auf ein Basisband umzuwandeln, wobei der Determinator (14) betriebsfähig ist, um komplexe Basisbandabtastungen als Darstellung für das erste Funksignal zu bestimmen und um komplexe Basisbandabtastungen als Darstellung für das zweite Funksignal zu bestimmen, und wobei die Speichereinheit (16) betreibbar ist, um komplexe Abtastungen des ersten Funksignals und des zweiten Funksignals in der Basisbanddarstellung zu speichern.

4. Vorrichtung (10) nach Anspruch 1, wobei der Verlauf der Darstellungen einer Zeitdauer entspricht, während dieser sich der mobile Sender-Empfänger (100) durch mehrere Zellen eines zellularen Kommunikationssystems bewegt, wobei der Determinator (14) und die Speichereinheit (16) betreibbar sind, um eine Darstellung eines Funkkanals zu bestimmen und zu speichern, so dass basierend auf den gespeicherten Darstellungen der Funkkanal zur Emulation rekonstruierbar ist, und/oder wobei der Determinator (14) und die Speichereinheit (16) betreibbar sind, um eine Darstellung eines Funkkanals zu bestimmen und zu speichern, so dass eine nachlassende Eigenschaft des Funkkanals aus der gespeicherten Darstellung rekonstruierbar ist.

5. Vorrichtung (10) nach Anspruch 1, wobei die erste und die zweite Beamforming-Konfiguration einem ersten und einem zweiten Softsektor eines Softsektorierungsplans entsprechen.

6. Vorrichtung (10) nach Anspruch 1, wobei die erste und die zweite Beamforming-Konfiguration Sektoren eines ersten und eines zweiten Softsektorierungsplans entsprechen.

7. Vorrichtung (10) nach Anspruch 1, wobei die erste und die zweite Funkressource unterschiedlichen Frequenzbändern oder Teilbändern entsprechen, und/oder wobei die erste und die zweite Funkressource unterschiedlichen Zeitschlitzen, Symbolen, Funkrahmen oder Übertragungszeitintervallen entsprechen.

8. Vorrichtung (20) für einen Basisstations-Sender-Empfänger (200) zum Freigeben einer Messung von mindestens zwei Beamforming-Konfigurationen an einem mobilen Sender-Empfänger, wobei der Basisstations-Sender-Empfänger (200) mehrere Sendeantennen betreibt, wobei die Vorrichtung (20) Folgendes umfasst:
einen Sender (22) zum Senden eines ersten Funksignals unter Verwendung einer ersten Beamforming-Konfiguration auf einer ersten Funkressource und zum Senden eines zweiten Funksignals unter Verwendung einer zweiten Beamforming-Konfiguration auf einer zweiten Funkressource, wobei die erste und zweite Beamforming-Konfiguration unterschiedlichen Softsektorierungsplänen entsprechen.

9. Vorrichtung (20) nach Anspruch 8, wobei die erste und die zweite Funkressource unterschiedlichen Frequenzbändern oder Teilbändern entsprechen, und/oder wobei die erste und die zweite Funkressource unterschiedlichen Zeitschlitzen, Symbolen, Funkrahmen oder Übertragungszeitintervallen entsprechen.

10. Vorrichtung (20) nach Anspruch 8, wobei der Basisstations-Sender-Empfänger (200) ein aktives Antennenarray mit mehreren Antennen umfasst, und wobei das aktive Antennenarray mindestens zwei Säulen mit jeweils mindestens zwei gestapelten Antennen umfasst.

11. Vorrichtung (20) nach Anspruch 8, wobei mindestens einige der mehreren Antennen kreuzpolarisierte Antennen sind.

12. Vorrichtung (20) nach Anspruch 8, wobei der Softsektorierungsplan mehrere Sektoren umfasst, die sich in ihrem Azimutwinkel und/oder in ihrem Elevationswinkel unterscheiden.

13. Verfahren für einen Basisstations-Sender-Empfänger (200) zum Freigeben einer Messung von mindestens zwei Beamforming-Konfigurationen durch einen mobilen Sender-Empfänger (100), wobei der Basisstations-Sender-Empfänger (200) mehrere Sendeantennen betreibt, wobei das Verfahren Folgendes umfasst:
Senden (42), durch den Basisstations-Sender-Empfänger (200), eines ersten Funksignals unter Verwendung einer ersten Beamforming-Konfiguration auf einer ersten Funkressource, wobei die erste Beamforming-Konfiguration einem ersten Softsektorierungsplan entspricht;
Senden (44), durch den Basisstations-Sender-Empfänger (200), eines zweiten Funksignals unter Verwendung einer zweiten Beamforming-Konfiguration auf einer zweiten Funkressource, wobei die zweite Beamforming-Konfiguration einem zweiten Softsektorierungsplan entspricht;
Empfangen (32), durch den mobilen Sender-Empfänger (100), eines ersten Funksignals unter Verwendung einer ersten Beamforming-Konfiguration auf einer ersten Funkressource und Empfangen eines zweiten Funksignals unter Verwendung einer zweiten Beamforming-Konfiguration auf einer zweiten Funkressource, wobei die erste und zweite Beamforming-Konfiguration einer Softsektorierung entsprechen;
Bestimmen (34), durch den mobilen Sender-Empfänger (100), einer Darstellung des ersten Funksignals und Bestimmen einer Darstellung des zweiten Funksignals; und
Speichern (36), durch den mobilen Sender-Empfänger (100), eines Verlaufs von Darstellungen des ersten Funksignals und des zweiten Funksignals.

14. Computerprogramm mit einem Programmcode zum Durchführen eines Verfahrens für einen Basisstations-Sender-Empfänger (200) zum Freigeben einer Messung von mindestens zwei Beamforming-Konfigurationen durch einen mobilen Sender-Empfänger (100), wobei der Basisstations-Sender-Empfänger (200) mehrere Sendeantennen betreibt, wobei das Verfahren Folgendes umfasst:
Senden (42), durch den Basisstations-Sender-Empfänger (200), eines ersten Funksignals unter Verwendung einer ersten Beamforming-Konfiguration auf einer ersten Funkressource, wobei die erste Beamforming-Konfiguration einem ersten Softsektorierungsplan entspricht;
Senden (44), durch den Basisstations-Sender-Empfänger (200), eines zweiten Funksignals unter Verwendung einer zweiten Beamforming-Konfiguration auf einer zweiten Funkressource, wobei die zweite Beamforming-Konfiguration einem zweiten Softsektorierungsplan entspricht;
wenn das Computerprogramm auf einem Computer oder einem Prozessor ausgeführt wird.

## Revendications

1. Appareil (10) pour un émetteur-récepteur mobile (100) destiné à mesurer les données d'au moins deux configurations de formation de faisceau d'un émetteur-récepteur de station de base (200), l'émetteur-récepteur de station de base (200) utilisant de multiples antennes d'émission (24), l'appareil (10) comprenant
un récepteur (12) destiné à recevoir un premier signal radio en utilisant une première configuration de formation de faisceau sur une première ressource radio et destiné à recevoir un deuxième signal radio en utilisant une deuxième configuration de formation de faisceau sur une deuxième ressource radio, les première et deuxième configurations de formation de faisceau correspondant à une sectorisation virtuelle ;
un déterminateur (14) destiné à déterminer une représentation du premier signal radio et à déterminer une représentation du deuxième signal radio ; et
une unité de stockage (16) destinée à stocker un historique des représentations du premier signal radio et du deuxième signal radio.

2. Appareil (10) selon la revendication 1, avec lequel le récepteur (12) peut être utilisé pour convertir un signal radio reçu d'une bande d'émission en une bande de base, avec lequel le déterminateur (14) peut être utilisé pour déterminer une représentation d'un premier canal radio en tant que représentation du premier signal radio et pour déterminer une représentation d'un deuxième canal radio en tant que représentation du deuxième signal radio, et avec lequel l'unité de stockage (16) peut être utilisée pour stocker des échantillons du premier canal radio et du deuxième canal radio dans une représentation en bande de base.

3. Appareil (10) selon la revendication 1, avec lequel le récepteur (12) peut être utilisé pour convertir un signal radio reçu d'une bande d'émission en une bande de base, avec lequel le déterminateur (14) peut être utilisé pour déterminer des échantillons complexes en bande de base en tant que représentation du premier signal radio et pour déterminer des échantillons complexes en bande de base en tant que représentation du deuxième signal radio, et avec lequel l'unité de stockage (16) peut être utilisée pour stocker des échantillons complexes du premier signal radio et du deuxième canal radio dans une représentation en bande de base.

4. Appareil (10) selon la revendication 1, avec lequel l'historique des représentations correspond à une période durant laquelle l'émetteur-récepteur mobile (100) se déplace à travers de multiples cellules d'un système de communication cellulaire, avec lequel le déterminateur (14) et l'unité de stockage (16) peuvent être utilisés pour déterminer et stocker une représentation d'un canal radio de telle sorte que le canal radio peut être reconstruit pour émulation en se basant sur les représentations stockées et/ou avec lequel le déterminateur (14) et l'unité de stockage (16) peuvent être utilisés pour déterminer et stocker une représentation d'un canal radio de telle sorte qu'une caractéristique d'évanouissement du canal radio peut être reconstruite à partir de la représentation stockée.

5. Appareil (10) selon la revendication 1, avec lequel les première et deuxième configurations de formation de faisceau correspondent à un premier et un deuxième secteur virtuel d'un schéma de sectorisation virtuelle.

6. Appareil (10) selon la revendication 1, avec lequel les première et deuxième configurations de formation de faisceau correspondent aux secteurs d'un premier et d'un deuxième schéma de sectorisation virtuelle.

7. Appareil (10) selon la revendication 1, avec lequel les première et deuxième ressources radio correspondant à des bandes ou sous-bandes de fréquences différentes, et/ou avec lequel les première et deuxième ressources radio correspondent à des créneaux temporels, symboles, trames hertziennes ou intervalles de temps d'émission différents.

8. Appareil (20) pour un émetteur-récepteur de station de base (200) destiné à permettre la mesure d'au moins deux configurations de formation de faisceau au niveau d'un émetteur-récepteur mobile, l'émetteur-récepteur de station de base (200) utilisant de multiples antennes d'émission, l'appareil (20) comprenant un émetteur (22) destiné à émettre un premier signal radio en utilisant une première configuration de formation de faisceau sur une première ressource radio et destiné à émettre un deuxième signal radio en utilisant une deuxième configuration de formation de faisceau sur une deuxième ressource radio, les première et deuxième configurations de formation de faisceau correspondant à des schémas de sectorisation virtuelle différents.

9. Appareil (20) selon la revendication 8, avec lequel les première et deuxième ressources radio correspondent à des bandes ou sous-bandes de fréquences différentes, et/ou avec lequel les première et deuxième ressources radio correspondent à des créneaux temporels, symboles, trames hertziennes ou intervalles de temps d'émission différents.

10. Appareil (20) selon la revendication 8, avec lequel l'émetteur-récepteur de station de base (200) comprend un réseau d'antennes actif avec les multiples antennes, et avec le réseau d'antennes actif comprend au moins deux colonnes d'au moins deux antennes empilées chacune.

11. Appareil (20) selon la revendication 8, avec lequel au moins certaines des multiples antennes sont des antennes à polarisations croisées.

12. Appareil (20) selon la revendication 8, avec lequel le schéma de sectorisation virtuelle comprend de multiples secteurs aux angles d'azimut différents et/ou aux angles d'élévation différents.

13. Procédé pour un émetteur-récepteur de station de base (200) destiné à permettre la mesure d'au moins deux configurations de formation de faisceau par un émetteur-récepteur mobile (100), l'émetteur-récepteur de station de base (200) utilisant de multiples antennes d'émission, le procédé comprenant les étapes suivantes
émission (42), par l'émetteur-récepteur de station de base (200), d'un premier signal radio en utilisant une première configuration de formation de faisceau sur une première ressource radio, la première configuration de formation de faisceau correspondant à un premier schéma de sectorisation virtuelle ;
émission (44), par l'émetteur-récepteur de station de base (200), d'un deuxième signal radio en utilisant une deuxième configuration de formation de faisceau sur une deuxième ressource radio, la deuxième configuration de formation de faisceau correspondant à un deuxième schéma de sectorisation virtuelle ;
réception (32), par l'émetteur-récepteur mobile (100), d'un premier signal radio en utilisant une première configuration de formation de faisceau sur une première ressource radio et recevoir un deuxième signal radio en utilisant une deuxième configuration de formation de faisceau sur une deuxième ressource radio, les première et deuxième configurations de formation de faisceau correspondant à une sectorisation virtuelle ;
détermination (34), par l'émetteur-récepteur mobile (100), d'une représentation du premier signal radio et détermination d'une représentation du deuxième signal radio ; et
stockage (36), par l'émetteur-récepteur mobile (100), d'un historique des représentations du premier signal radio et du deuxième signal radio.

14. Programme informatique possédant un code de programme destiné à mettre en oeuvre un procédé pour un émetteur-récepteur de station de base (200) destiné à permettre la mesure d'au moins deux configurations de formation de faisceau par un émetteur-récepteur mobile (100), l'émetteur-récepteur de station de base (200) utilisant de multiples antennes d'émission, le procédé comprenant les étapes suivantes
émission (42), par l'émetteur-récepteur de station de base (200), d'un premier signal radio en utilisant une première configuration de formation de faisceau sur une première ressource radio, la première configuration de formation de faisceau correspondant à un premier schéma de sectorisation virtuelle ; et
émission (44), par l'émetteur-récepteur de station de base (200), d'un deuxième signal radio en utilisant une deuxième configuration de formation de faisceau sur une deuxième ressource radio, la deuxième configuration de formation de faisceau correspondant à un deuxième schéma de sectorisation virtuelle ;
lorsque le programme informatique est exécuté sur un ordinateur ou un processeur.
